# EUROPEAN PATENT SPECIFICATION

(11) **EP 2 386 444 B1**
(45) Date of publication and mention of the grant of the patent: **06.03.2013**
(21) Application number: 11165585.8
(22) Date of filing: 10.05.2011
(51) Int. Cl.: B60P 3/04

(54) **Improvements in and relating to vent assemblies for transporters**
Verbesserungen von und in Zusammenhang mit Entlüftungsanordnungen für Transporter
Améliorations de ou associées aux ensembles de ventilation pour transporteurs

(30) Priority: 10.05.2010 GB 201007760
(43) Date of publication of application: 16.11.2011
(73) Proprietor: Parkhouse Country Estates Limited, Milnthorpe Cumbria LA7 7RF (GB)
(72) Inventor: Houghton, Michael John, Milnthorpe, Cumbria LA7 7RF (GB)
(74) Representative: Clark, David James

(56) References cited:
- EP-A2- 1 712 413
- DE-C- 483 264
- FR-A- 663 244
- FR-A- 748 836
- US-A- 388 671
- US-A- 1 712 180

## Description

### Field to the Invention

The present invention relates to vent assemblies for, use with transporters. The present invention further relates to associated methods.

### Background to the Invention

Trailers and other transporters for use in transporting livestock generally comprise a number of levels each level having a platform to support the livestock. Each level may be divided into sections along its length with one or more gates, the gates being shut to create separate pens for the livestock.

Such transporters enable livestock to be transported economically and efficiently. Transporters for transporting livestock may comprise an integrated cab plus transport area or comprise a trailer forming a livestock area to be towed behind a tractor unit.

The transporters are provided with ventilating means to allow air to flow between the interior and exterior of the transporter. Typically, the ventilating means comprises a series of vents. Each vent comprises an opening in the side wall of the transporter and a cover plate to control the flow of air through the opening. Typically vents are provided for each level of the transporter and the vents on each level are arranged such that each livestock pen is provided with its own vent. Each vent comprises a cover plate in the form of a hinged flap which can be located in a first position to cover the opening in the transporter side wall or located in a second position to hang below the opening.

The vent design of known transporters may provide a limited number of ventilation options and require the cover plate position to be manually set for each vent. The number of vents which are in an open configuration may affect not only the flow of air to the transporter interior but also the temperature thereof. It may therefore need to be necessary to adjust the cover plate positions depending on the livestock being transported and the extent to which the transporter is loaded with livestock and this may be a time consuming process.

The vent design of known transporters comprises large openings in the side walls of the transporter with retaining bars then being provided to prevent livestock from escaping via the openings. However, livestock may still be able to get parts of their bodies, such as their snouts, through the openings risking injury thereto.

FR 748836 describes a ventilation system for vehicles that uses the different density properties of the atmosphere of a vehicle to enhance continuous ventilation.

Further examples of prior art is disclosed in US 388 671 and EP 1 712 413.

It is an aim of the present invention to address at least one problem associated with the prior art, whether referred to herein or otherwise.

### Summary of the Invention

According to a first aspect of the present invention there is provided a vent assembly for use with a transporter as set out in accompanying claim 1.

Suitably, in the first position the flow control member obstructs the air flow path to a lesser extent than it does in the second position. Suitably, the first position of the flow control member is an open position. Suitably, in the first position the flow control member substantially does not obstruct the air flow path. Suitably, the second position of the flow control member is a closed position. Suitably, in the second position the flow control member substantially obstructs the air flow path. Suitably, the flow control member can be located in one or more positions intermediate said first and second positions in which it partially obstructs the air flow path.

Suitably, the assembly comprises actuating means for moving the flow control member between said first and second positions.

Suitably, the actuating means comprises powered actuating means. Suitably, the actuating means comprises an actuator. Suitably, the actuating means comprises a linear actuator. The actuator may comprise a hydraulic, pneumatic or electrical actuator. Suitably, the actuating means is adapted to produce linear movement of the flow control member.

Suitably, the flow control member can be caused to move between positions automatically without the need for an operator to manually adjust its position.

Suitably, the vent assembly is connected to a temperature monitoring and control means and can be modulated between positions to suit the required temperature.

Suitably, the assembly comprises actuating means for moving the flow control member from a first position towards a second position. Suitably, the assembly comprises actuating means for moving the flow control member from a first position to a second position.

Suitably, the assembly comprises actuating means for moving the flow control member from a second position towards a first position. Suitably, the assembly comprises actuating means for moving the flow control member from a second position to a first position.

Suitably, the actuating means comprises a first actuator for moving the flow control member from a first position to a second position. Suitably, the actuating means comprises a second actuator for moving the flow control member from a second position to a first position.

Suitably, the actuating means is configured such that the first actuator can move the flow control member in a first direction from a first position to a second position. Suitably, the first actuator can hold the flow control member in said second position. Suitably, the actuating means is configured such that the first actuator can not move the flow control member in a second direction from a second position to a first position.

Suitably, the actuating means is configured such that the second actuator can move the flow control member in a second direction from a second position to a first position. Suitably, the second actuator can hold the flow control member in said first position. Suitably, the actuating means is configured such that the second actuator can not move the flow control member in a first direction from a first position to a second position.

Suitably, the first actuator is adapted to create a force tending to move the flow control member to its second position. Suitably, the first actuator is adapted to create a force tending to move the flow control member in a first direction.

Suitably, the second actuator is adapted to create a force tending to move the flow control member to its first position..Suitably, the second actuator is adapted to create a force tending to move the flow control member in a second direction.

Suitably, the assembly is configured such that the second actuator permanently exerts a force on the flow control member. Suitably, the assembly is configured such that the first actuator selectively exerts a force on the flow control member. Suitably, the first actuator is adapted to exert a force on the flow control member which opposes and overcomes the force exerted by the second actuator.

Suitably, the assembly is adapted such that the actuating means or a part thereof and the flow control member can be selectively coupled and decoupled from one another.

Suitably, the actuating means can be set in a configuration in which operation of the first actuator causes movement of the flow control member from a first position to a second position. Suitably, the actuating means can be set in a configuration in which operation of the first actuator does not cause movement of the flow control member from a first position to a second position. Suitably, the actuating means can be set in a configuration in which the second actuator is able to cause movement of the flow control member from a second position to a first position regardless of how the first actuator is operated. Suitably, the actuating means can be set in a configuration in which operation of the first actuator permits the second actuator to cause movement of the flow control member from a second position to a first position.

Suitably, the assembly can be set either: (i) in a configuration in which operation of the first actuator causes movement of the flow control member in a first direction from a first position to a second position against an opposing force of the second actuator and in which configuration reverse operation of the first actuator permits the second actuator to cause movement of the flow control member in a second direction from a second position to a first; and (ii) in a configuration in which reverse operation of the first actuator is not necessary to permit the second actuator to cause movement of the flow control member and in which configuration the second actuator causes movement of the flow control member in a second direction from a second position to a first and maintains the flow control member in its first position.

Suitably, the actuating means comprises an actuating member. Suitably, the actuating member is adapted to be caused to move by an actuator. Suitably, the actuating member is adapted to move linearly in substantially the same directions as the flow control member slides.

Suitably, the actuating member is adapted to cause movement of the flow control member. Suitably, the actuating member is adapted to cause movement of the flow control member in a first direction. Suitably, the actuating member is adapted to engage with the flow control member to cause movement thereof.

Suitably, the assembly is adapted such that movement of the actuating member can cause movement of the flow control member from the first position to the second position. Suitably, the assembly is adapted such that movement of the actuating member does not cause movement of the flow control member from the second position to the first position. Suitably, the assembly is adapted such that movement of the actuating member can permit movement of the flow control member from the second position to the first position.

Suitably, the actuating member is coupled to a first actuator. Suitably, the actuating member is coupled to an actuator by a wire. The actuating member may comprise a block, suitably an aluminium block, mounted to a wire such that the block moves as the wire is pulled by an actuator.

Suitably, the actuating means comprises a wire. Suitably, the wire is adapted to extend along a transporter, suitably along substantially the length thereof. Suitably an actuator, suitably a first actuator, is provided at a first end of the cable. The actuator may comprise a linear actuator. The actuator may comprise a pneumatic, hydraulic or electrical actuator. Suitably, a rewind mechanism is provided at the second end of the wire.

Suitably, the flow control member comprises a part adapted to be engaged by an actuating member such that movement of the actuating member can cause movement of the flow control member. Suitably, said part comprises a latch. Suitably, the flow control member comprises a body to which the latch is pivotally mounted.

Suitably, the latch has an abutment adapted to be engaged by the actuating member to cause the latch and consequently the flow control member to move towards the second position. Suitably, the latch may be pivoted out of the way of the actuating member such that the latch can move past the actuating member and allow the latch and thus the flow control member to move under the influence of the second actuator in a direction opposed to that the first actuator is tending to move the actuating member in. Suitably, the latch automatically re-engages the actuating member.

Suitably, the apparatus comprises a second actuator adapted to act upon the latch and bias the flow control member to move in a second direction. Suitably, the second actuator comprises a spring, suitably a gas spring.

Suitably, the assembly comprises a plurality of a flow control members which are slideable between first and second positions such that the extent to which the flow control members obstruct said air flow path can be varied by sliding the flow control members between said first and second positions.

Suitably, the assembly is adapted such that each pen of a transporter is provided with its own flow control member.

Suitably, the flow control members can be set such that: (i) they are all in the first position; (ii) they are all in the second position; or (iii) some are in the first position and some in the second. Suitably, one or more flow control members can be set such that they are in a position intermediate said first and second positions.

Suitably, two or more of the flow control members can be simultaneously moved between first and second positions. Suitably, one or more of the flow control members can be moved independently of other flow control members.

Suitably, the assembly is adapted such that a flow control member can be selectively configured to move simultaneously with one or more other flow control members or to move independently thereof.

Suitably, all of the flow control members can be simultaneously moved from a first position to a second position. Suitably, all of the flow control members can be simultaneously moved from a first position to a second position by a first actuator moving them in a first direction. The assembly may be adapted such that the flow control members can only be moved from their first positions to their second positions simultaneously with one another.

Suitably, all of the flow control members can be simultaneously moved from a second position to a first position. Suitably, all of the flow control members can be simultaneously moved from a second position to a first position by second actuators moving them in a second direction when the first actuator is operated in reverse to permit that movement.

Suitably, one or more flow control members can be moved from a second position to a first position while the remaining flow control members are held in a second position. Suitably, one or more flow control members can be moved from a second position to a first position by releasing their link from the first actuator to allow the second actuators to move them in a second direction while the remaining flow control members are held in a second position by the first actuator.

Suitably, if some flow control members are in a second position and some in a first position all of the flow control members can be placed in the same position by moving those which are in the second position to the first position. Suitably, if some flow control members are in a second position and some in a first position all of the flow control members can be placed in the same position by second actuators moving those which are in the second position to the first position when the first actuator is operated in reverse to permit that movement.

Suitably, the assembly comprises a plurality of flow control members and further comprises actuating means for moving the flow control members between said first and second positions such that the flow control members can simultaneously be caused to move between said first and second positions.

Suitably, the actuating means is adapted such that it can be selectively configured to cause a flow control members to move simultaneously with one or more other flow control members or to move independently thereof.

Suitably, the actuating means comprises first and second actuators. Suitably, the assembly comprises at least two flow control members per first actuator. Suitably, the assembly comprises a second actuator for each flow control member.

Suitably, two or more flow control members are adapted to be moved by a single first actuator. Suitably, each flow control member is adapted to be moved by a single second actuator.

Suitably, in use, the flow control members are each biased to a first position by a second actuator. A first actuator may be operated to move the flow control members to a second position against the bias of the second actuators. If it is desired that a flow control member remain in, or be returned to, the first position while the other flow control members are moved to, or held in, the second position then a latch of said flow control member may be positioned such that the first actuator does not act upon the flow control member thus allowing the second actuator to hold, or return, the flow control member to the first position. Suitably, the latch can be positioned to allow the second actuator to return and/or hold the flow control member in the first position and the latch then automatically returns to a position in which the latch and thus the flow control member can be caused to move by operation of the first actuator.

Suitably, the vent assembly comprises an automatic opening and closing mechanism for switching the vent assembly between open and closed configurations. Suitably, the automatic opening and closing mechanism comprises the actuating means. Suitably, to allow the vent assembly or a part thereof to be manually opened from the ground by an operator the vent assembly comprises a de-latching mechanism. Suitably, once the vent assembly, or a part thereof, is opened the de-latching mechanism automatically reattaches itself to the automatic opening and closing mechanism. Suitably, the de-latching mechanism comprises the latch of the flow control member.

Suitably, the flow control member comprises a plurality of apertures for providing said air flow path. Suitably, the flow control member comprises a plurality of elongate apertures. Suitably, the flow control member comprises a plurality of substantially vertically extending apertures. Suitably, the apertures are substantially identical to one another. Suitably; each aperture is separated from an adjacent aperture in the horizontal,direction by a distance which is at least equal to the horizontal dimension of said apertures.

Suitably, assembly comprises a flow control member arranged to overlie a panel and to slide relative thereto. Suitably, the assembly comprises a vent panel associated with the flow control member. Suitably, assembly comprises a flow control member arranged to overlie a vent panel and to slide relative thereto. Suitably, the vent panel comprises a panel having apertures therein to permit airflow through the vent panel. Suitably, the apertures of the vent panel are adapted to cooperate with apertures of the flow control member to provide an air flow path between the interior and exterior of the transporter when the respective apertures are in register with one another.

Suitably, if the assembly comprises a plurality of flow control members a vent panel is associated with each one. Suitably, a vent panel is arranged to lie adjacent to and internally of a flow control member. Suitably, each flow control member has a vent panel arranged to lie adjacent to and internally thereof. Alternatively, one vent panel may be adapted to lie adjacent to and internally of several flow control members. The side wall of a transporter may have apertured sections adapted to act as said vent panels. Alternatively the side wall of a transporter may comprise cut out portions into which vent panels are installed.

Suitably, the flow control member is mounted to a panel, suitably a vented panel, such that it can slide relative thereto. Suitably, the panel is adapted to lie on the inner side of the flow control member. Suitably, the panel is adapted to provide an inner surface of a transporter The panel may be adapted to form a side wall if a transporter. Alternatively, the panel may be adapted to locate into an opening in a side wall of a transporter. Suitably, the flow control member comprises guide channels. Suitably, the guide channels are located over guides, suitably low friction guides. Suitably the guides are acetal guides. Suitably, the guides provide a positive stop to facilitate accurate positioning of the flow control member. Suitably, the flow control member is retained on the guides by securing means. Suitably, the securing means comprise guides, suitably nylon guides which may be quick release guides to facilitate disconnection of the flow control member for cleaning. Suitably, low friction guides engage upper and lower edges of the flow control members.

Suitably, the assembly comprises a panel arranged to lie internal of the flow control member in a transporter. Suitably, the panel comprises an air flow path. Suitably, the panel comprises a plurality of apertures for providing said air flow path. Suitably, the panel comprises a plurality of elongate apertures. Suitably, the panel comprises a plurality of substantially vertically extending apertures. Suitably, the apertures are substantially identical to one another. Suitably, each aperture is separated from an adjacent aperture in the horizontal direction by a distance which is at least equal to the horizontal dimension of said apertures.

Suitably, the assembly comprises an apertured panel and an apertured flow control member. Suitably, the apertures of the panel are substantially identical to those of the flow control member and are suitably arranged in substantially the same configuration.

Suitably, the flow control member is adapted to move relative to the panel such that the extent to which apertures of the flow control member are in registration with the apertures of the panel can be varied.

Suitably, the apertures of the panel and the flow control member can be substantially offset such that the flow control member substantially fully obstructs the air path through the panel. Suitably, the apertures of the panel and the flow control member can be located substantially fully in register such that the flow control member substantially does not obstruct the air path through the panel.

Suitably, the assembly comprises apertures for providing said air flow path and which apertures have substantially no horizontal upwardly facing edges. Suitably, the flow control member comprises apertures for providing said air flow path and which apertures have substantially no horizontal upwardly facing edges. Suitably, the panel comprises apertures for providing said air flow path and which apertures have substantially no horizontal upwardly facing edges.

Suitably, the substantial absence of upwardly facing horizontal edges may minimise the collection of debris in the apertures and may facilitate cleaning thereof.

Suitably, the assembly comprises apertures for providing said air flow path and which apertures are sized such that that they substantially prevent livestock pressing body parts through them.

Suitably, the apertures comprise elongate slots having a maximum width of 10cm. Preferably, the apertures each have a maximum width of 5cm, for example 3cm. Suitably, the apertures have a width of around 25mm. Suitably, the slots are arranged to extend substantially vertically. Suitably, the apertures each have a maximum horizontal dimension of 10cm. Preferably, the apertures each have a maximum horizontal dimension of 5cm, for example 3cm. Suitably, the apertures have a maximum horizontal dimension of around 25mm.

Suitably, the spacing between the apertures is slightly wider than the width of the apertures. Suitably, the spacing between the apertures is at least 1 mm greater than the width of the apertures, for example around 3 cm greater.

Suitably, the vent assembly comprises a flow control member comprising apertures which comprise elongate slots having a maximum width of 3cm. Suitably, the apertures have a width of around 25mm. Suitably, the slots are arranged to extend substantially vertically. Suitably, the spacing between the apertures is slightly wider than the width of the apertures. Suitably, the spacing between the apertures is at least 1 mm greater than the width of the apertures, for example around 3 cm greater.

Suitably, the vent assembly comprises a panel located adjacent the flow control member and which has apertures arranged to register with the apertures of the flow control member. Suitably, the apertures of the panel comprise elongate slots having a maximum width of 3cm. Suitably, the apertures have a width of around 25mm. Suitably, the slots are arranged to extend substantially vertically. Suitably, the spacing between the apertures is slightly wider than the width of the apertures. Suitably, the spacing between the apertures is at least 1mm greater than the width of the apertures, for example around 3 cm greater.

Suitably, the vent assembly has a smooth internal finish which may prevent livestock deforming the assembly and/or becoming trapped between the vent assembly and other parts of a transporter such as a lifting floor. The vent assembly may comprise a non-stick coating, for example a Teflon (TM) coating, on part thereof, suitably on surfaces which face the interior of a transporter.

Suitably, the flow control member can be detached from the remainder of the vent assembly. This flow control member may thus be removed for cleaning and/or for summer use when it may not be required.

According to another aspect of the present invention there is provided a method of transporting livestock, said method comprising loading livestock into a transporter including a vent assembly according to the first aspect.

Suitably, the method comprises adjusting the position of closure member of a vent assembly.

### Brief Description of the Drawings

The present invention will now be described, by way of example only, and with reference to the following drawings, in which:
Figure 1 is an isometric view of a transporter;
Figure 2 is an elevation showing a vent assembly in an open configuration;
Figure 3 is an elevation showing a vent assembly in a closed configuration;

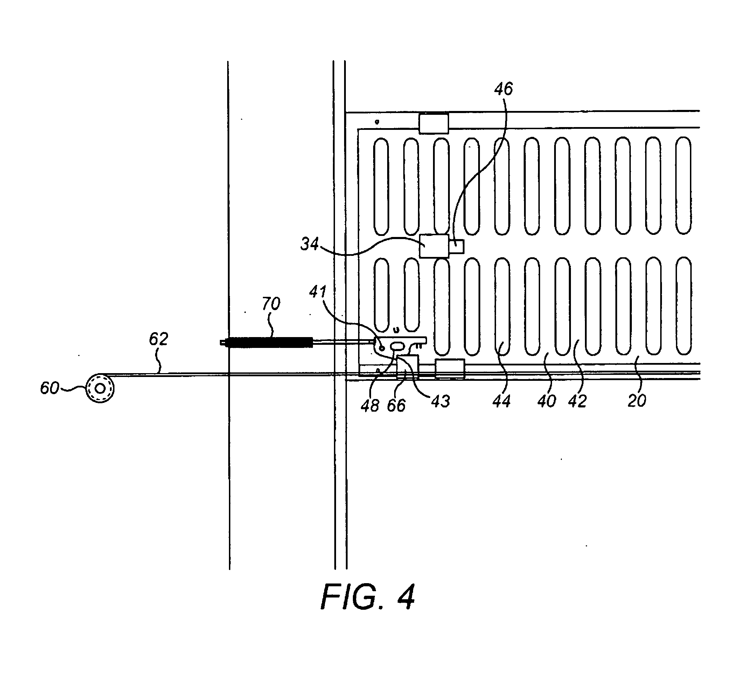

Figure 4 is a detailed view showing part of a vent assembly in an open configuration;

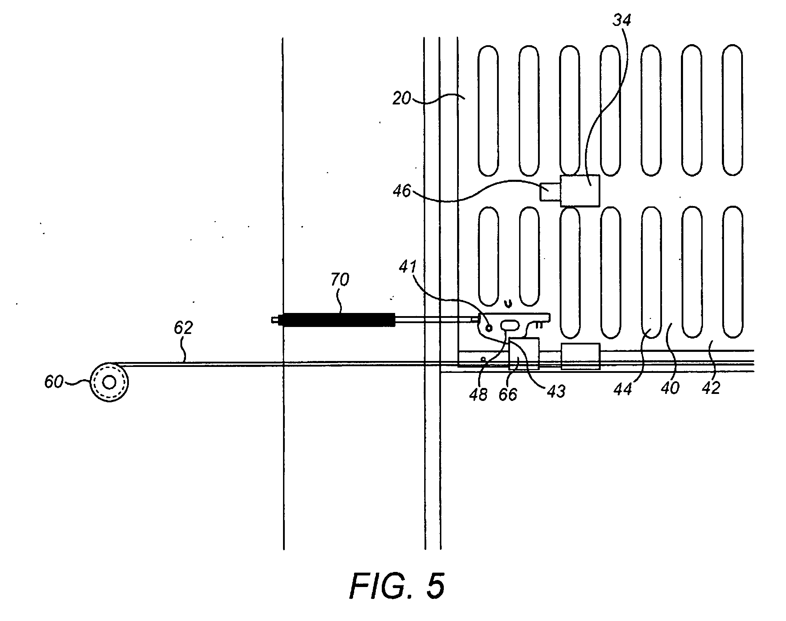

Figure 5 is a detailed view showing part of a vent assembly in a closed configuration;
Figure 6 is a view showing the operation of a latch; and
Figure 7 is an isometric view showing part of a transporter with the nearside side wall removed.

### Description of the Preferred Embodiments

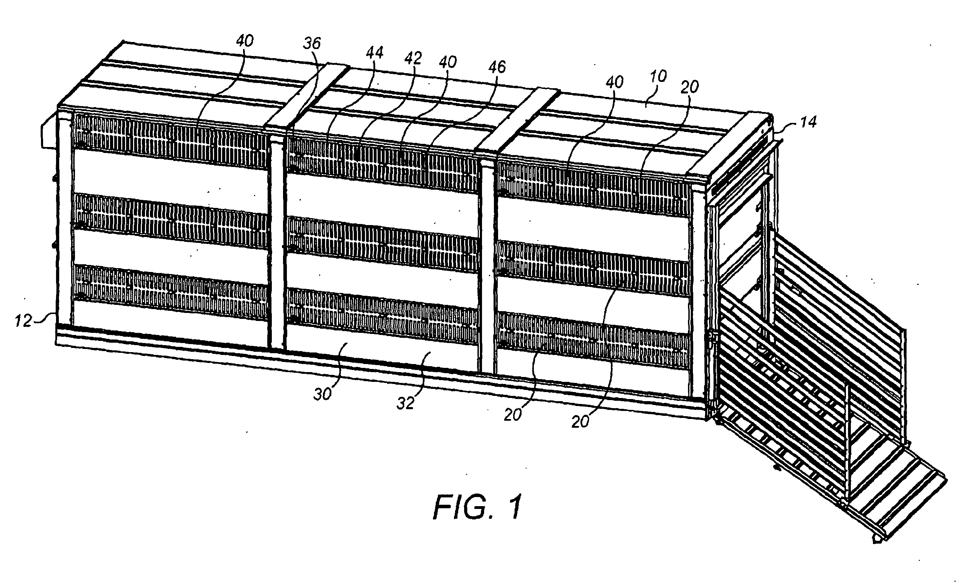

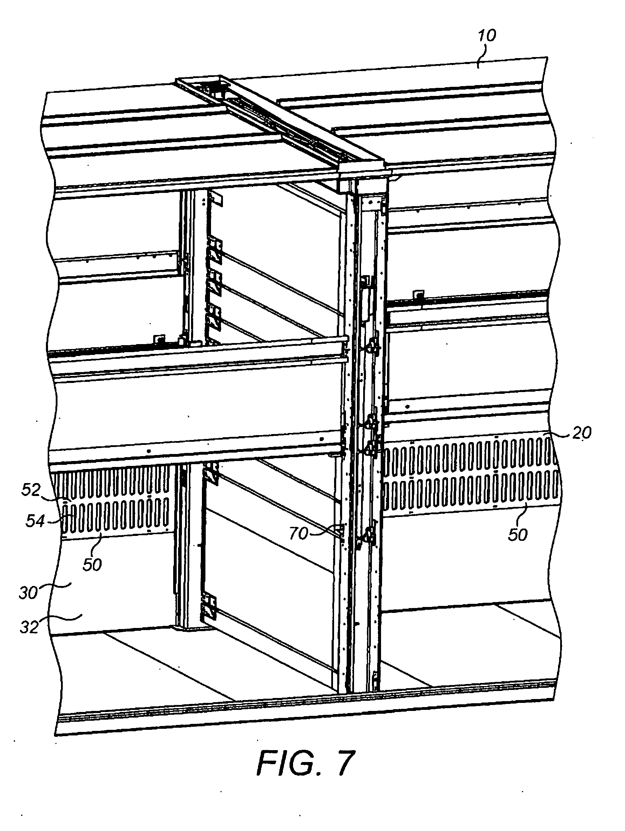

As illustrated by Figures 1 and 7 a transporter 10 comprises vent assemblies 20 (three illustrated in Figure 1, one in Figure 7 and two not illustrated) located in the sides 30 (one wall illustrated in Figure 1 the other in Figure 7) of the transporter 10.

Each vent assembly 10 comprises three flow control members 40 which are substantially identical to one another. The flow control members 40 each comprise a body 42 comprising a metal sheet having a plurality of elongate apertures 44 formed therein. The flow control members 40 further comprise guide channels 46 which locate over low friction guides (not shown) carried by the side wall 32 of the transporter. Further low friction guides (not shown) engage upper and lower edges of the flow control members. The flow control members are retained on the guides by securing means comprising fixing blocks 34 secured to the low friction guides).

Each vent assembly further comprises vent panels 50 as illustrated by Figure 7 which lie on the interior side of the flow control members 40. A vent panel 50 (only two shown) is associated with each flow control member 40. The vent panels 50 are adapted to form part of the side wall 32 of the transporter 10. Each panel 50 comprises a body 52 comprising a metal sheet having a plurality of elongate apertures 54 formed therein.

The apertures 44, 54 of the flow control member and vent panel each have a width of 25mm and are separated from one another by 28mm in the horizontal direction. The apertures 44, 54 are substantially identical to one another and arranged in a substantially identical configuration. The flow control member 40 can thus be slid from side to side to vary the register between the apertures 44 of the flow control member 40 and the apertures 54 of the vent panel 50 so as to close or open the flow path through the apertures 54 of the vent panel 50.

Each vent assembly 20 further comprises actuating means to move the flow control members 40 between first and second positions. The first position corresponds to an open vent position in which, an air flow path is provided between the interior and exterior of the transporter 10 through the apertures 44, 54 of the flow control member 40 and the associated vent panel 50. The second position corresponds to a closed vent position in which an air flow path between the interior and exterior of the transporter 10 through a vent panel 50 is substantially blocked by the flow control member 40.

The actuating means comprises a first actuator (not shown) which drives a pulley 60 which moves a steel wire 62 to actuate movement of the flow control members 50. The actuator comprises an electrical linear actuator. In other embodiments (not illustrated) the actuator comprises a hydraulic or pneumatic actuator. The actuator (not shown) is provided at the front of the transporter 10 and at the rear of the transporter 10 is a pulley 64 linked to a return spring (not shown). The wire 62 extends for the length of the transporter 10 and is adapted to simultaneously actuate movement of several flow control members 40 of the same vent assembly 20.

The wire 62 carries actuating members 66 which are in the form of aluminium blocks. An actuating member 66 is associated with each flow control member and is adapted to engage part of the flow control member 40 and cause it to move relative to the vent panel 50.

The flow control members each comprise a latch 48 which is pivotally mounted to the body 42 of the flow control member. The latch 48 is adapted to be engaged by the actuating member 66 as the actuating member is caused to travel in a first direction towards the front 12 of the transporter 10. The latch 48 is mounted to the body 42 of the flow control member 40 such that movement of the latch 48 in the first direction causes movement of the flow control member 40 in the first direction.

The actuating means further comprises second actuators 70 which each comprise a gas spring. Each flow control member 40 has a second actuator 70 associated therewith. Each second actuator 70 is mounted to a side wall 30 of the transporter and arranged to engage the latch 48 of the respective flow control member 40.

The second actuator 70 exerts a force on the latch 48 which tends to try to move it in a second direction towards the rear 14 of the transporter. The latch 48 is mounted to the body 42 of the flow control member 40 such that movement of the latch 48 in the second direction causes movement of the flow control member 40 in the second direction.

The actuating means is adapted such that the first actuator can exert a greater force on the latch than does the second and in a substantially opposed direction thereto such that when the actuating member 66 is moved in a first direction it can cause the latch 48 and thus the flow control member 40 to travel in a first direction towards the front 12 of the transporter 10 and hold the latch 48 and thus the flow control member 40 in a second position against the force exerted by the second actuator 70.

The actuating means is adapted such that when the actuating member 66 is caused to travel in a second direction towards the rear 14 of the transporter 10 the force exerted on the latch 48 by the second actuator 70 can cause the latch 48 and thus the flow control member 40 to travel in a second direction towards the rear 14 of the transporter 10 and hold the latch 48 and thus the flow control member 40 in a first position.

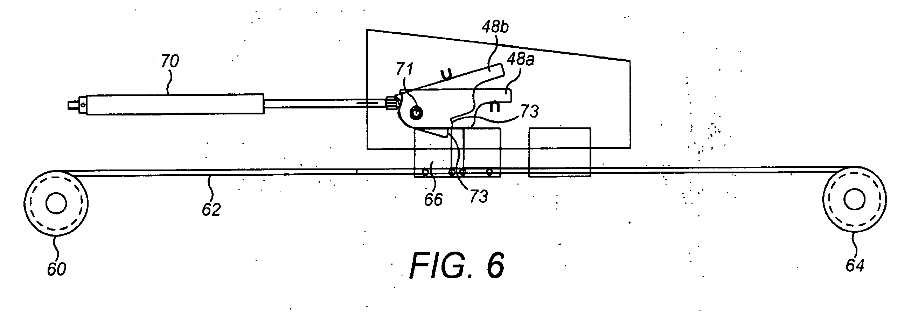

As illustrated by Figure 6 the latch 48 is moveable between a first position 48a and a second position 48b by rotation about a pivot 41.

In the first position 48a the latch 48 can be engaged by the actuating member 66 which contacts the abutment 43 and can cause the latch 48 and thus the flow control member 40 to move towards the front 12 of the transporter 10 when the actuating member is moved in a first direction. With the latch in the first position 48a the latch 48 continues to be engaged by the actuating member 66 whilst the flow control member is in the second position and so the actuating member 66 can retain the flow control member in its second position until the actuating member 66 is moved in a second direction.

In the second position 48b the latch is disengaged from the actuating member 66 as the abutment 43 is moved out of the path of the actuating member 66. This allows the second actuating means 70 to move the latch 48 and thus the flow control member 40 in a second direction regardless of the position of the actuating member and can thus move the flow control member to the first position. This movement of the latch from the first position 78a to the second position 78b allows a flow control member 40 to be de-latched from its connection with the first actuating member which allows it to be moved to a first position independently of other flow control members.

The latch 78 is adapted to pivot back to its first position 78a once it is moved rearwards of the actuating member 66. The latch is also adapted to be knocked upwards to its second position 78b when the actuating member 66 contacts it while approaching from a forwards side of the latch 78 and to drop back down when the actuating member 66 has passed under it and moved to the rearward side of the latch 78. The latch 78 can thus automatically be re-latched into connection with the first actuating member by moving the actuating members 66 in the second direction and returning all the flow control members 40 of a vent assembly to the first position.

In use livestock may be loaded into one or more pens provided in the transporter 10. Depending on the configuration of the pens and the load of the transporter as well as factors such as ambient temperature it may be necessary to modify the ventilation of the transporter.

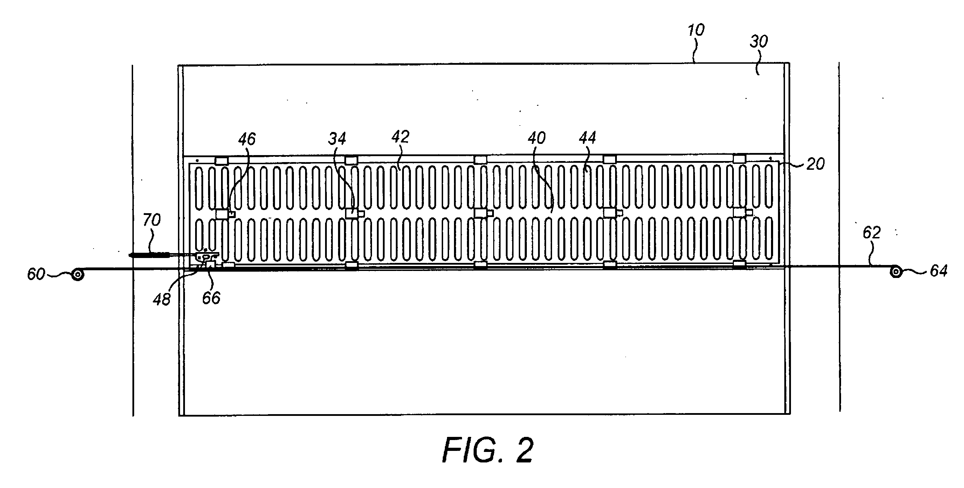

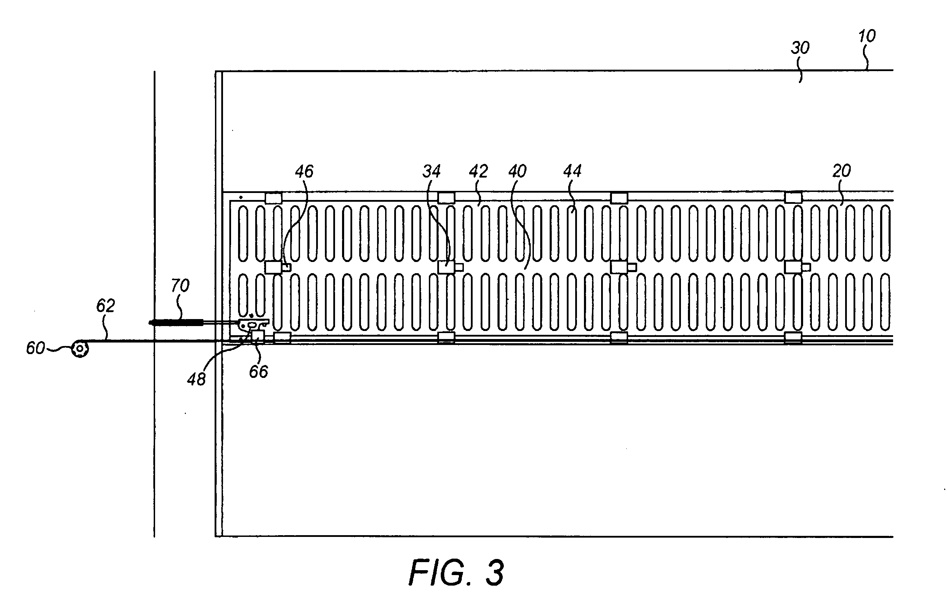

In the illustrated embodiment there are six vent assemblies (not all shown) each comprising three flow control members (not all shown). For convenience the operation of a vent assembly will be described further with particular reference to Figures 2 and 3 which show a single vent assembly 20 and show only one flow control member 40 of that assembly.

The second actuator 70 of the actuating means biases each flow control member 40 to a first, open, position in which apertures 54 of the vent panel 50 (not shown in Figures 2 and 3) are in register with apertures 44 of the flow control member allowing an air flow path between the interior and exterior of the transporter. In this configuration the gas springs of the second actuators 70 are in an extended position as shown by Figure 2.

To simultaneously move each flow control member 40 of a vent assembly the first actuator is operated to move the cable 62 and thus the actuating members 66 in a first direction. The actuating members 66 bear against the latches 48 of the flow control members 40 and cause the flow control members to slide to a second, closed, position in which apertures 54 of the of the vent panel 50 (not shown in Figures 2 and 3) are offset from the apertures 44 of the flow control member causing the an air flow path between the interior and exterior of the transporter to be substantially blocked. In this configuration the gas springs of the second actuators 70 are in a compressed position as shown by Figure 3 and are exerting a force tending to return the flow control members 40 to their first, open, position. That force is though resisted by the actuating members 66 which bear against the latches 48 and are held in position by the action of the first actuator.

To simultaneously move each flow control member 40 of a vent assembly from a second position to a first position the first actuator is operated to allow the cable 62 and thus the actuating members 66 to move in a second direction. The actuating members 66 thus move away from the latches 48 of the flow control members 40 which permits the force exerted on the latches by the second actuators 70 to move the flow control members towards their first, open, positions.

It is also possible to cause one or more flow control members 40 of a vent assembly 20 to move from a second, closed, position to a first, open, position whilst retaining others in a second, closed, position. This is achieved by manually moving the latch 48 of a flow control member 40 to a second position 48b such that it de-latches from the associated actuating member 66. The actuating member 66 thus no longer prevents the second actuator 70 from moving the latch 48 and thus the flow control member 40 in the second direction. The flow control member can thus be moved to the first, open, position. As the actuating members 66 are not moved any flow control members whose latches remain latched with the associated actuating.member will remain in the second, closed, position.

To re-latch the flow control members 40 which have been manually allowed to move to the first, open, position the first actuating means is operated to allow all the remaining flow control members 40 of the vent assembly 20 to move to the first, open, position. This causes the actuating members 66 to re-latch with the latches 48 of the flow control members 40 which were manually allowed to move to the first, open, position. The flow control members 40 can then all be simultaneously moved to a second, closed, position if desired.

It will be appreciated that preferred embodiments of the invention may provide for efficient transportation of livestock.

## Claims

1. A vent assembly (20) for use with a transporter (10), the vent assembly (20) being adapted to provide an air flow path between an interior and an exterior of a transporter (10) and wherein the assembly comprises a flow control member (40) which is slideable between first and second positions such that the extent to which the flow control member (40) obstructs said air flow path can be varied by sliding the flow control member (40) between said first and second positions, wherein the assembly comprises a plurality of a flow control members (40) which are slideable between first and second positions such that the extent to which the flow control members (40) obstruct said air flow path can be varied by sliding the flow control members (40) between said first and second positions and **characterised in that**:
the flow control members (40) can be set such that some are in the first position and some in the second and wherein the assembly is adapted such that a flow control member (40) can be selectively configured to move simultaneously with one or more other flow control members (40), or to move independently thereof.

2. A vent assembly (20) according to claim 1, wherein the assembly comprises actuating means for moving the flow control members (40) between said first and second positions.

3. A vent assembly (20) according to any preceding claim, wherein the actuating means comprises a linear actuator and/or wherein the flow control member (40) can be caused to move between positions automatically without the need for an operator to manually adjust its position and/or wherein the vent assembly (20) is connected to a temperature monitoring and control means and can be modulated between positions to suit the required temperature.

4. A vent assembly (20) according to any preceding claim, wherein the actuating means comprises a first actuator for moving the flow control member (40) from a first position to a second position and wherein the actuating means comprises a second actuator for moving the flow control member (40) from a second position to a first position.

5. A vent assembly (20) according to claim 4, wherein the assembly is configured such that the second actuator permanently exerts a force on a flow control member (40) and wherein, the assembly is configured such that the first actuator selectively exerts a force on the flow control member (40) and wherein the first actuator is adapted to exert a force on the flow control member (40) which opposes and overcomes the force exerted by the second actuator.

6. A vent assembly (20) according to claim 4 or 5, wherein the assembly can be set either: (i) in a configuration in which operation of the first actuator causes movement of the flow control member (40) in a first direction from a first position to a second position against an opposing force of the second actuator and in which configuration reverse operation of the first actuator permits the second actuator to cause movement of the flow control member (40) in a second direction from a second position to a first; and (ii) in a configuration in which reverse operation of the first actuator is not necessary to permit the second actuator to cause movement of the flow control member (40) and in which configuration the second actuator causes movement of the flow control member (40) in a second direction from a second position to a first and maintains the flow control member (40) in its first position.

7. A vent assembly (20) according to any preceding claim, wherein the actuating means comprises an actuating member (66) and wherein the assembly is adapted such that movement of the actuating member (66) can cause movement of the flow control member (40) from the first position to the second position and wherein the assembly is adapted such that movement of the actuating member (66) does not cause movement of the flow control member (40) from the second position to the first position and/or wherein the flow control member (40) comprises a latch (48) adapted to be engaged by an actuating member (66) such that movement of the actuating member (66) can cause movement of the flow control member (40).

8. A vent assembly (20) according to any preceding claim, wherein the flow control members (40) can be set such that: (i) they are all in the first position; (ii) they are all in the second position; or (iii) some are in the first position and some in the second position.

9. A vent assembly (20) according to any preceding claim, adapted such that one or more of the flow control members (40) can be detached from the remainder of the vent assembly (20).

10. A vent assembly (20) according to any preceding claim, wherein the assembly comprises apertures for providing said air flow path and which apertures have substantially no horizontal upwardly facing edges and/or wherein the assembly comprises apertures for providing said air flow path and which apertures are sized such that that they substantially prevent livestock pressing body parts through them.

11. A method of transporting livestock, said method comprising loading livestock into a transporter (10) including a vent assembly according to any preceding claim.

## Patentansprüche

1. Entlüftungsanordnung (20) zur Verwendung mit einem Transporter (10), wobei die Entlüftungsanordnung (20) dafür eingerichtet ist, eine Luftströmungsbahn zwischen einem Inneren und einem Äußeren des Transporters (10) bereitzustellen, und wobei die Anordnung ein Durchflussregelungselement (40) umfasst, das zwischen einer ersten und einer zweiten Stellung verschoben werden kann derart, dass das Ausmaß, in dem das Durchflussregelungselement (40) die Luftströmungsbahn versperrt, verändert werden kann durch ein Verschieben des Durchflussregelungselements (40) zwischen der ersten und der zweiten Stellung, wobei die Anordnung mehrere Durchflussregelungselemente (40) umfasst, die zwischen einer ersten und einer zweiten Stellung verschoben werden können derart, dass das Ausmaß, in dem die Durchflussregelungselemente (40) die Luftströmungsbahn versperren, verändert werden kann durch ein Verschieben der Durchflussregelungselemente (40) zwischen der ersten und der zweiten Stellung, und **dadurch gekennzeichnet, dass**:
die Durchflussregelungselemente (40) derart eingestellt werden können, dass sich einige in der ersten Stellung befinden und sich einige in der zweiten Stellung befinden, und wobei die Anordnung derart eingerichtet ist, dass ein Durchflussregelungselement (40) selektiv dafür konfiguriert werden kann, sich gleichzeitig mit einem oder mehreren anderen Durchflussregelungselement(en) (40) zu bewegen oder sich unabhängig davon zu bewegen.

2. Entlüftungsanordnung (20) nach Anspruch 1, wobei die Anordnung Betätigungsmittel zum Bewegen der Durchflussregelungselemente (40) zwischen der ersten und der zweiten Stellung umfasst.

3. Entlüftungsanordnung (20) nach einem der vorhergehenden Ansprüche, wobei die Betätigungsmittel einen linearen Stellantrieb umfassen und/oder wobei das Durchflussregelungselement (40) veranlasst werden kann, sich automatisch, ohne die Notwendigkeit, dass ei n Bediener seine Stellung manuell einstellt, zwischen den Stellungen zu bewegen, und/oder wobei die Entlüftungsanordnung (20) mit einem Temperaturüberwachungs- und -regelungsmittel verbunden ist und zwischen den Stellungen moduliert werden kann, um sich der erforderlichen Temperatur anzupassen.

4. Entlüftungsanordnung (20) nach einem der vorhergehenden Ansprüche, wobei die Betätigungsmittel einen ersten Stellantrieb zum Bewegen des Durchflussregelungselements (40) von einer ersten Stellung zu einer zweiten Stellung umfassen und wobei die Betätigungsmittel einen zweiten Stellantrieb zu m Bewegen des Durchflussregelungselements (40) von einer zweiten Stellung zu einer ersten Stellung umfassen.

5. Entlüftungsanordnung (20) nach Anspruch 4, wobei die Anordnung derart konfiguriert ist, dass der zweite Stellantrieb dauerhaft eine Kraft auf ein Durchflussregelungselement (40) ausübt, und wobei die Anordnung derart konfiguriert ist, dass der erste Stellantrieb selektiv eine Kraft auf das Durchflussregelungselement (40) ausübt, und wobei der erste Stellantrieb dafür eingerichtet ist, eine Kraft auf das Durchflussregelungselement (40) auszuüben, die der durch den zweiten Stellantrieb ausgeübten Kraft entgegenwirkt und sie überwindet.

6. Entlüftungsanordnung (20) nach Anspruch 4 oder 5, wobei die Anordnung eingestellt werden kann entweder: (i) in einer Konfiguration, in der eine Betätigung des ersten Stellantriebs eine Bewegung des Durchflussregelungselements (40) in einer ersten Richtung von einer ersten Stellung zu einer zweiten Stellung, gegen eine entgegenwirkende Kraft von dem zweiten Stellantrieb, bewirkt und in welcher Konfiguration eine umgekehrte Betätigung des ersten Stellantriebs ermöglicht, dass der zweite Stellantrieb eine Bewegung des Durchflussregelungselements (40) in einer zweiten Richtung von einer zweiten Stellung zu einer ersten bewirkt, und (ii) in einer Konfiguration, in der eine umgekehrte Betätigung des ersten Stellantriebs nicht notwendig ist, um zu ermöglichen, dass der zweite Stellantrieb eine Bewegung des Durchflussregelungselements (40) bewirkt, und in welcher Konfiguration der zweite Steilantrieb eine Bewegung des Durchflussregelungselements (40) in einer zweiten Richtung von einer zweiten Stellung zu einer ersten bewirkt und das Durchflussregelungselement (40) in seiner ersten Stellung hält.

7. Entlüftungsanordnung (20) nach einem der vorhergehenden Ansprüche, wobei die Betätigungsmittel ein Betätigungselement (66) umfassen und wobei die Anordnung derart eingerichtet ist, dass eine Bewegung des Betätigungselements (66) eine Bewegung des Durchflussregelungselements (40) von der ersten Stellung zu der zweiten Stellung bewirken kann, und wobei die Anordnung derart eingerichtet ist, dass eine Bewegung des Betätigungselements (66) keine Bewegung des Durchflussregelungselements (40) von der zweiten Stellung zu der ersten Stellung bewirkt, und/oder wobei das Durchflussregelungselement (40) eine Klinke (48) umfasst, die dafür eingerichtet ist, durch ein Betätigungselement (66) derart in Eingriff genommen zu werden, dass eine Bewegung des Betätigungselements (66) eine Bewegung des Durchflussregelungselements (40) bewirken kann.

8. Entlüftungsanordnung (20) nach einem der vorhergehenden Ansprüche, wobei die Durchflussregelungselemente (40) derart eingestellt werden können, dass: (i) sie sich alle in der ersten Stellung befinden, (ii) sie sich alle in der zweiten Stellung befinden oder (iii) sich einige in der ersten Stellung und einige in der zweiten Stellung befinden.

9. Entlüftungsanordnung (20) nach einem der vorhergehenden Ansprüche, die derart eingerichtet ist, dass eines oder mehrere der Durchflussregelungselemente (40) von dem Rest der Entlüftungsanordnung (20) getrennt werden kann/können.

10. Entlüftungsanordnung (20) nach einem der vorhergehenden Ansprüche, wobei die Anordnung Öffnungen umfasst, um di e Luftströmungsbahn bereitzustellen, und diese Öffnungen im Wesentlichen keine horizontalen nach oben zeigenden Kanten haben, und/oder wobei die Anordnung Öffnungen umfasst, um die Luftströmungsbahn bereitzustellen, und diese Öffnungen derart bemessen sind, dass sie im Wesentlichen verhindern, dass Nutztiere Körperteile durch dieselben drücken.

11. Verfahren zum Transportieren von Nutztieren, wobei das Verfahren das Verladen von Nutztieren in einen Transporter (10) umfasst, der eine Entlüftungsanordnung nach einem der vorhergehenden Ansprüche einschließt.

## Revendications

1. Ensemble de ventilation (20) destiné à être utilisé avec un transporteur (10), l'ensemble de ventilation (20) étant conçu pour fournir une voie d'écoulement d'air entre un intérieur et un extérieur d'un transporteur (10), et l'ensemble comprenant un élément de régulation de débit (40) qui es t susceptible de coulisser entre des première et deuxième positions de telle sorte que le degré d'obstruction, par l'élément de régulation de débit (40), de ladite voie d'écoulement d'air puisse être modifié par coulissement de l'élément de régulation de débit (40) entre lesdites première et deuxième positions, l'ensemble comprenant une pluralité d'éléments de régulation de débit (40) qui sont susceptibles de coulisser entre des première et deuxième positions de telle sorte que le degré d'obstruction, par les éléments de régulation de débit (40), de ladite voie d'écoulement d'air puisse être modifié par coulissement des éléments de régulation de débit (40) entre lesdites première et deuxième positions, et **caractérisé en ce que** :
les éléments de régulation de débit (40) peuvent être ajustés de telle sorte que certains sont à la première position et certains sont à la deuxième position, et l'ensemble étant conçu de telle sorte qu'un élément de régulation de débit (40) puisse être configuré de manière sélective pour se déplacer simultanément avec un ou plusieurs autres éléments de régulation de débit (40), ou pour se déplacer indépendamment de ceux-ci.

2. Ensemble de ventilation (20) selon la revendication 1, dans lequel l'ensemble comprend un moyen d'actionnement pour déplacer les éléments de régulation de débit (40) entre lesdites première et deuxième positions.

3. Ensemble de ventilation (20) selon l'une quelconque des revendications précédentes, dans lequel le moyen d'actionnement comprend un actionneur linéaire et/ou dans lequel l'élément de régulation de débit (40) peut être amené à se déplacer automatiquement entre des positions sans nécessiter l'ajustement manuel de sa position par un opérateur et/ou dans lequel l'ensemble de ventilation (20) est connecté à un moyen de surveillance et de régulation de température et peut être modulé entre des positions en fonction de la température requise.

4. Ensemble de ventilation (20) selon l'une quelconque des revendications précédentes, dans lequel le moyen d'actionnement comprend un premier actionneur pour déplacer l'élément de régulation de débit (40) à partir d'une première position jusqu'à une deuxième position et dans lequel le moyen d'actionnement comprend un deuxième actionneur pour déplacer l'élément de régulation de débit (40) à partir d'une deuxième position jusqu'à une première position.

5. Ensemble de ventilation (20) selon la revendication 4, dans lequel l'ensemble est configuré de telle sorte que le deuxième actionneur exerce de manière permanente une force sur un élément de régulation de débit (40) et dans lequel l'ensemble est configuré de telle sorte que le premier actionneur exerce de manière sélective une force sur l'élément de régulation de débit (40) et dans lequel le premier actionneur est conçu pour exercer une force sur l'élément de régulation de débit (40) qui s'oppose à, et vainc, la force exercée par le deuxième actionneur.

6. Ensemble de ventilation (20) selon la revendication 4 ou 5, dans lequel l'ensemble peut être ajusté soit : (i) dans une configuration dans laquelle le fonctionnement du premier actionneur provoque le déplacement de l'élément de régulation de débit (40) dans une première direction à partir d'une première position jusqu'à une deuxième position à l'encontre d'une force d'opposition du deuxième actionneur et dans laquelle configuration le fonctionnement inverse du premier actionneur permet au deuxième actionneur de provoquer le déplacement de l'élément de régulation de débit (40) dans une deuxième direction à partir d'une deuxième position jusqu'à une première position ; soit (ii) dans une configuration dans laquelle le fonctionnement inverse du premier actionneur n'est pas nécessaire pour permettre au deuxième actionneur de provoquer le déplacement de l'élément de régulation de débit (40) et dans laquelle configuration le deuxième actionneur provoque le déplacement de l'élément de régulation de débit (40) dans une deuxième direction à partir d'une deuxième position jusqu'à une première position et maintient l'élément de régulation de débit (40) dans sa première position.

7. Ensemble de ventilation (20) selon l'une quelconque des revendications précédentes, dans lequel le moyen d'actionnement comprend un élément d'actionnement (66) et dans lequel l'ensemble est conçu de telle sorte que le déplacement de l'élément d'actionnement (66) puisse provoquer le déplacement de l'élément de régulation de débit (40) à partir de la première position jusqu'à la deuxième position et dans lequel l'ensemble est conçu de telle sorte que le déplacement de l'élément d'actionnement (66) ne provoque pas le déplacement de l'élément de régulation de débit (40) à partir de la deuxième position jusqu'à la première position et/ou dans lequel l'élément de régulation de débit (40) comprend un verrou (48) conçu pour être engagé par u n élément d'actionnement (66) de telle sorte que le déplacement de l'élément d'actionnement (66) puisse provoquer le déplacement de l'élément de régulation de débit (40).

8. Ensemble de ventilation (20) selon l'une quelconque des revendications précédentes, dans lequel les éléments de régulation de débit (40) peuvent être ajustés de telle sorte que : (i) ils sont tous à la première position ; (ii) ils sont tous à la deuxième position ; ou (iii) certains sont à la première position et certains sont à la deuxième position.

9. Ensemble de ventilation (20) selon l'une quelconque des revendications précédentes, conçu de telle sorte que l'un ou plusieurs des éléments de régulation de débit (40) puissent être détachés du reste de l'ensemble de ventilation (20).

10. Ensemble de ventilation (20) selon l'une quelconque des revendications précédentes, dans lequel l'ensemble comprend des ouvertures pour fournir ladite voie d'écoulement d'air et lesquelles ouvertures n'ont sensiblement aucun bord horizontal orienté vers le haut et/ou dans lequel l'ensemble comprend des ouvertures pour fournir ladite voie d'écoulement d'air et lesquelles ouvertures sont dimensionnées de telle sorte qu'elles empêchent sensiblement du bétail de presser des parties de leurs corps à travers elles.

11. Procédé de transport de bétail, ledit procédé comprenant le chargement de bétail dans un transporteur (10) comportant un ensemble de ventilation selon l' une quelconque des revendications précédentes.
